# FASCICULE DE BREVET EUROPEEN

(11) **EP 2 001 287 B1**
(45) Date de publication et mention de la délivrance du brevet: **17.07.2013**
(21) Numéro de dépôt: 07731788.1
(22) Date de dépôt: 21.03.2007
(51) Int. Cl.: A01M 7/00

(54) **APPAREIL AGRICOLE D'EPANDAGE DE PRODUITS EQUIPE D'UN DISPOSITIF ANTICHOC**
EINE STOSSSICHERUNGSVORRICHTUNG AUFWEISENDE LANDWIRTSCHAFTLICHE VORRICHTUNG ZUM AUSBRINGEN EINES PRODUKTS
PRODUCT-SPREADING AGRICULTURAL APPARATUS EQUIPPED WITH AN ANTI-IMPACT DEVICE

(30) Priorité: 23.03.2006 FR 0650997
(43) Date de publication de la demande: 17.12.2008
(73) Titulaire: KUHN S.A., 67700 Saverne (FR)
(72) Inventeur: BELLO DE CARVALHO, Sérgio, 99470 000 Nao-Me-Toque Rio Grande de Sul (BR)
(86) Numéro de dépôt international: PCT/FR2007/050975
(87) Numéro de publication internationale: WO 2007/107676

(56) Documents cités:
- EP-A1- 0 572 091
- EP-A2- 0 388 995
- WO-A2-03/005799
- FR-A- 2 450 035
- FR-A1- 2 270 774
- FR-A1- 2 630 301
- GB-A- 2 139 063

## Description

La présente invention se rapporte au domaine technique général de l'épandage de produits et notamment au domaine de la pulvérisation de produits de traitement.

L'invention concerne un appareil agricole d'épandage de produits comportant un bâti et une rampe d'épandage de produits constituée par un tronçon central et deux bras latéraux s'étendant de part et d'autre dudit tronçon central, voir par exemple le document EP-A-O 572 091.

Dans la suite de la description la rampe d'épandage de produits sera simplement appelée rampe et l'appareil agricole d'épandage de produits sera intitulé appareil agricole.

Il est également connu dans l'état de la technique (voir par exemple FR-A-2450 035) un pulvérisateur porté avec un bâti et une rampe d'épandage constituée d'un tronçon central et de deux bras latéraux s'étendant de part et d'autre dudit tronçon central. Ces bras latéraux sont déployés lors du travail et sont repliés vers le haut afin de réduire l'encombrement de ladite rampe lors du transport. Au transport, chaque bras latéral est maintenu par l'intermédiaire d'un support de maintien respectif et est verrouillé par l'intermédiaire d'un verrou respectif. Pour sécuriser la position des bras latéraux, le verrou est engagé dans le support de maintien respectif ainsi la rampe est solidaire du bâti.

Lors d'un déplacement sur des terrains accidentés lors du travail comme lors du transport, le pulvérisateur subit des chocs qui sont provoqués par le passage des roues du tracteur sur des bosses et/ou dans des trous. La rampe étant liée au bâti, elle subit également ces chocs. De part cette liaison de la rampe sur le bâti, l'impact sur la rampe est augmenté et la rampe doit faire face à des sollicitations importantes. Des chocs répétés entraînent une fatigue générale qui peut provoquer la rupture de la rampe et des équipements délicats placés sur le bâti du pulvérisateur. Avec la vitesse, la violence des chocs est encore augmentée. Par conséquent, l'utilisateur est obligé de réduire considérablement sa vitesse d'avance au transport comme au travail pour atténuer ces chocs et préserver notamment la rampe.

La présente invention selon la revendication 1 a pour but de proposer un dispositif pour un appareil agricole d'épandage de produits permettant de remédier à cet inconvénient de l'état de la technique.

A cet effet, une importante caractéristique de l'invention consiste en ce qu'un dispositif antichoc est disposé entre ledit bâti et ladite rampe, que ladite rampe est liée audit bâti au moyen d'une traverse et que ladite traverse est liée audit bâti au moyen d'au moins une articulation d'axe sensiblement horizontal et perpendiculaire à la direction d'avance.

Grâce à ce dispositif antichoc, les chocs dus au passage de bosses tant par les roues du tracteur dans le cas d'un appareil agricole porté ou automoteur que par celles de l'appareil agricole dans le cas d'un appareil traîné peuvent efficacement être absorbés lors du travail comme lors du transport. L'ensemble de l'appareil agricole et plus précisément la rampe sont donc moins sollicités et par conséquent la durée de vie de l'appareil ainsi que de la rampe est prolongée. De plus, l'utilisateur n'est plus contraint de réduire sa vitesse d'avance lors des déplacements sur routes ou dans les champs.

D'autres caractéristiques et avantages de l'invention se dégageront des revendications et de la description qui va suivre d'un exemple de réalisation non limitatif de l'invention avec référence aux dessins annexés dans lesquels :
- la **figure 1** représente une vue générale d'un appareil agricole dans la position de transport comportant un dispositif antichoc selon l'invention,

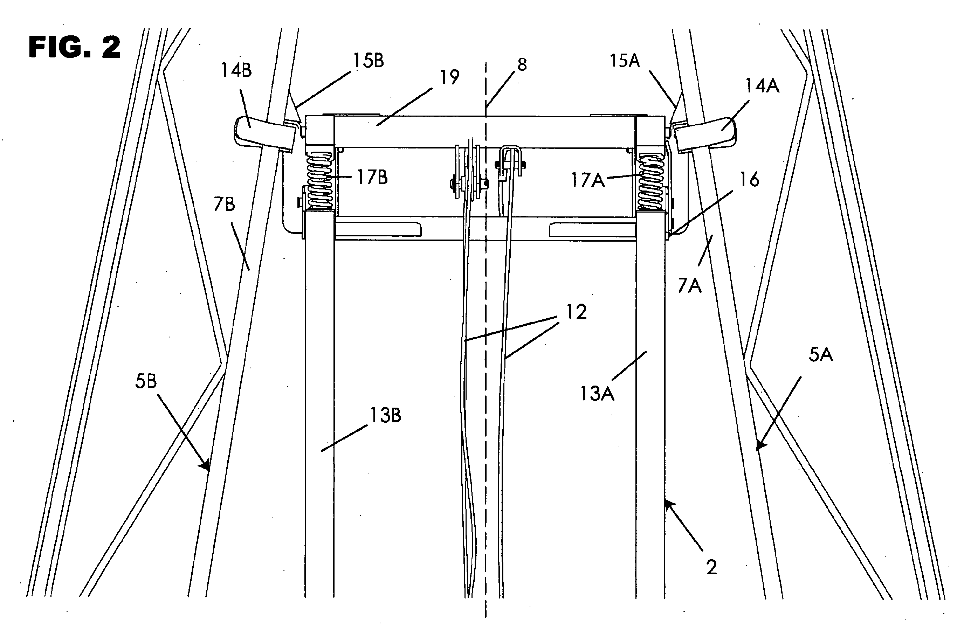

- la **figure 2** est une vue avant du dispositif antichoc de la figure 1,
- la **figure 3** est une vue de côté dudit dispositif antichoc de la figure 1,
- la **figure 4** représente un dispositif antichoc selon un deuxième exemple de réalisation.

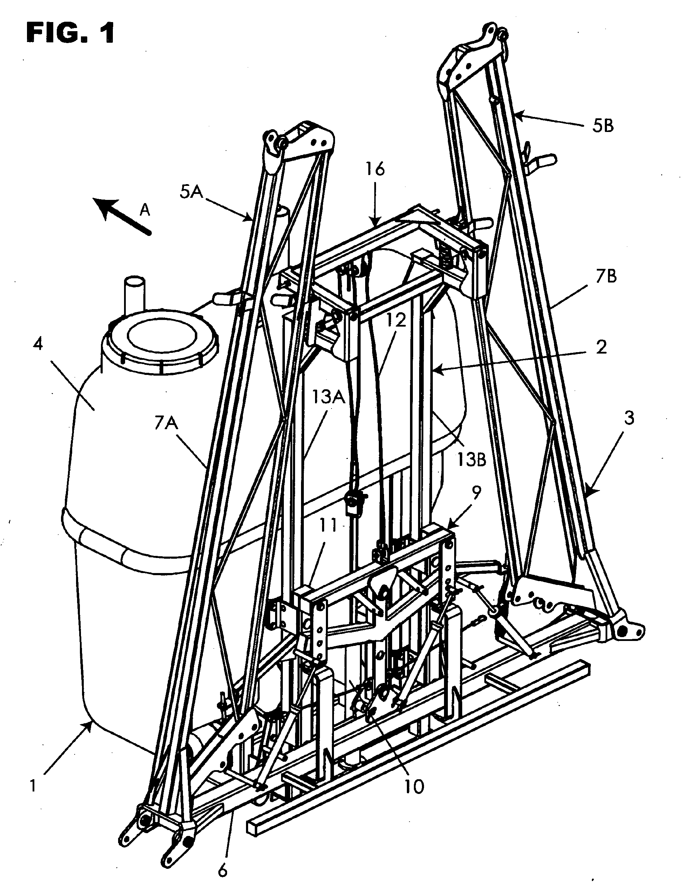

La figure 1 représente un premier exemple de réalisation d'un appareil agricole d'épandage de produits (1) comportant un bâti (2) et une rampe d'épandage de produits (3). Le bâti (2) supporte notamment la rampe (3) et une cuve (4). La rampe (3) est destinée à épandre, le plus uniformément possible, des engrais, des produits de traitement du type phytosanitaires, ou d'autres types de produits à épandre contenus dans la cuve (4) sur le sol ou sur des cultures. Pour cela, l'appareil agricole (1) est déplacé suivant une direction et un sens d'avance indiqué par la flèche (A) par l'intermédiaire d'un tracteur. La rampe (1) n'est montrée que partiellement sur les figures.

Dans la suite de la description, les notions "avant" et "arrière", "devant" et "derrière" sont définies par rapport au sens d'avance (A) et les notions "droite" et "gauche" sont définies en regardant l'appareil agricole (1) de l'arrière dans ledit sens d'avance (A).

D'une manière connue, la rampe (3) est constituée par deux bras latéraux (5A, 5B) et un tronçon central (6). Un bras latéral (5A, 5B) est disposé de part et d'autre du tronçon central (6). Chaque bras latéral (5A, 5B) peut être réalisé en un ou plusieurs tronçons. Ces tronçons étant, de manière connue, liés respectivement les uns aux autres au moyen d'articulations. Seuls les tronçons intermédiaires (7A, 7B) sont représentés sur les figures. Chaque tronçon (7A, 7B) est destiné à porter des moyens d'épandage pour épandre des produits sur le sol ou sur les cultures. Les moyens d'épandage sont, par exemple, des buses de pulvérisation dans le cas d'un pulvérisateur agricole. Ces moyens d'épandage ne sont pas représentés sur les figures. D'une manière généralement connue, la rampe (3) est centrée par rapport au bâti (2). Les tronçons intermédiaires (7A, 7B) et les tronçons extérieurs sont disposés sensiblement symétriquement par rapport au plan vertical médian (8) du bâti (2) de l'appareil d'épandage (1).

Lors des travaux d'épandage de produits, les bras latéraux (5A, 5B) de la rampe (3) sont déployés de manière à couvrir une large bande de terrain : la rampe (3) s'étend ainsi transversalement à la direction d'avance (A) et sensiblement parallèlement au sol. La rampe (3) est, de façon connue, suspendue au bâti (2) par l'intermédiaire d'un dispositif de suspension (9). Le dispositif de suspension (9) a pour rôle d'absorber et d'atténuer les mouvements du tracteur pour éviter leur transmission directe et intégrale à la rampe (3) de telle sorte que celle-ci puisse avoir un comportement optimal dans le champ. Le dispositif de suspension (9) a pour fonction de suspendre la rampe (3), au bâti (2) de l'appareil agricole (1) en permettant notamment une orientation correcte de la rampe (3) en fonction de la configuration du terrain sur lequel évolue l'appareil agricole (1).

Par ailleurs, la rampe (3) est liée au bâti (2) de l'appareil d'épandage (1) de manière réglable pour adapter la hauteur d'épandage à la nature des plantes à traiter et à leur niveau de développement. Il faut en effet, pour la meilleure efficacité du traitement, que les moyens d'épandage se trouvent à une certaine hauteur par rapport aux plantes. Ce réglage en hauteur se fait d'une manière connue, par le positionnement de la rampe (3) sur le bâti (2) par l'intermédiaire d'un moyen actionneur (10). Sous l'action du moyen actionneur tel qu'un treuil manuel, un vérin hydraulique, etc., la rampe (3) se déplace en translation sur le bâti (2) au moyen d'un chariot (11). A cet effet, le bâti (2) comporte deux rails (13) sur lesquels vient se déplacer le chariot (11) qui porte la rampe (3). Les deux rails (13) sont disposés symétriquement par rapport au plan vertical médian (8) et constituent une glissière pour le chariot (11). Les rails (13) s'étendent sensiblement verticalement et de part et d'autre du plan vertical médian (8). La rampe (3) via ledit chariot (11) est liée au moyen actionneur (10) par l'intermédiaire d'un organe de traction (12). Ainsi, la rampe (3) est soulevée ou abaissée puis maintenue à une hauteur déterminée par rapport au sol. A la lumière des figures, le moyen actionneur (10) est avantageusement un vérin hydraulique et l'organe de traction (12) est avantageusement un câble.

Pour le transport, les bras latéraux (5A, 5B) sont repliés de manière connue de sorte à réduire l'encombrement de la rampe (3) et notamment de façon à respecter le gabarit autorisé pour circuler sur la voie publique. Le tronçon extérieur et le(les) tronçon(s) intermédiaire(s) (7A, 7B) de chaque bras (5A, 5B) de la rampe (3) sont repliés vers le haut, respectivement dépliés sensiblement à l'horizontal pour le travail, par l'intermédiaire d'au moins un actionneur et d'au moins un système élastique respectifs, autour des articulations les liant les uns aux autres. Les actionneurs sont par exemple des vérins hydrauliques. Chaque actionneur s'étend entre le tronçon central (6) et le tronçon intermédiaire (7A, 7B) adjacent respectif. Le tronçon extérieur correspondant et, le cas échéant, le(s) tronçon(s) intermédiaire(s) (7A, 7B) supplémentaire(s) sont, quant à eux, repliés, respectivement dépliés grâce au système élastique correspondant.

Lorsque les deux bras latéraux (5A, 5B) sont repliés pour le transport, chaque bras latéral (5A, 5B) est maintenu par l'intermédiaire d'un support de maintien (14A, 14B) et d'un verrou (15A, 15B) respectifs. Chaque bras latéral (5A, 5B) comporte un verrou (15A, 15B) respectif. Le bâti (2) est équipé d'un support de maintien (14A, 14B) de part et d'autre du plan vertical médian (8). Le support de maintien (14A, 14B) est configuré de manière à guider le mouvement du bras latéral (5A, 5B) respectif lors du pliage. Il présente, à cet effet, une forme en U qui guide et limite les mouvements vers l'avant et vers l'arrière par rapport à la direction d'avance (A) de chaque bras latéral (5A, 5B) lors du pliage. Les verrous (15A, 15B) sont, pour leur part, destinés à empêcher un dépliage accidentel des bras latéraux (5A, 5B) durant le transport. Lorsque les bras latéraux sont repliés pour le transport, la position de chaque bras latéral (5A, 5B) est verrouillée par rapport au bâti (2) par un verrou (15A, 15B) respectif. Le verrouillage se fait par l'engagement du verrou (15A, 15B) dans ledit support de maintien (14A, 14B) correspondant. Chacun des bras latéraux (5A, 5B) est équipé d'un tel verrou (15A, 15B).

Pour le pliage des bras latéraux (5A, 5B) pour arriver à la position de transport, la rampe (3) est positionnée à une hauteur moyenne sur les rails (13) du bâti (2) par l'intermédiaire du vérin hydraulique (10). Puis les tronçons intermédiaires (7A, 7B) et respectivement les tronçons extérieurs sont repliés vers le haut via l'actionneur et le système élastique respectifs. Lorsque les tronçons intermédiaires (7A, 7B) et les tronçons extérieurs sont complètement repliés, la rampe (3) est abaissée au moyen du vérin hydraulique (10) à un niveau plus bas. Lors de cette translation vers le bas, les verrous (15A, 15B) viennent s'engager dans le support de maintien (14A, 14B) respectif et ainsi les bras latéraux (5A, 5B) sont verrouillés sur le bâti (2). La rampe (3) est alors solidaire du bâti (2).

A partir de la position de transport, pour mettre la rampe (3) dans sa position de travail, les différentes étapes décrites ci-dessus sont réalisées dans le sens inverse : déverrouillage et dépliage des bras latéraux (5A, 5B) et finalement réglage de la hauteur d'épandage.

Selon une importante caractéristique de l'invention, l'appareil agricole (1) comporte un dispositif antichoc (16) qui est disposé entre ledit bâti (2) et ladite rampe (3), ladite rampe (3) est liée audit bâti (2) au moyen d'une traverse (19) et ladite traverse (19) est liée audit bâti (2) au moyen d'au moins une articulation (18A, 18B) d'axe sensiblement horizontal et perpendiculaire à la direction d'avance (A). Ledit dispositif antichoc (16) permet d'éviter au moins partiellement la transmission des chocs de ladite rampe (3) vers ledit bâti (2). Ainsi, les chocs dus au passage de bosses tant par les roues du tracteur dans le cas d'un appareil agricole porté ou automoteur que par celles de l'appareil agricole dans le cas d'un appareil traîné peuvent efficacement être absorbés. L'utilisateur n'est donc plus contraint de réduire sa vitesse d'avance (A) lors des déplacements sur les routes ou dans les champs. L'ensemble de l'appareil agricole (1) et la rampe (3) sont donc moins sollicités par les irrégularités du sol et par conséquent la durée de vie de la rampe (3) notamment est prolongée.

Le dispositif antichoc (16) est disposé entre ledit bâti (2) et ladite traverse (19). La rampe (3) est liée à ladite traverse (19) par l'intermédiaire d'un organe de traction (12). Le dispositif antichoc (16) est destiné à agir entre le bâti (2) et la rampe (3). Il absorbe et atténue les chocs entre la rampe (3) et le bâti (2) et inversement. L'impact des terrains irréguliers ou des obstacles sur la rampe (3) est par conséquent limité lors du transport lorsque les bras latéraux (5A, 5B) sont repliés comme lors du travail lorsque les bras latéraux (5A, 5B) sont déployés. Lors du travail, la rampe (3) est alors suspendue par l'organe de traction (12) à la traverse (19). Le dispositif antichoc (16) prévu entre la rampe (3) et le bâti (2) ou la traverse (19) absorbe les chocs verticaux lorsque les roues du tracteur rencontrent des obstacles.

Dans l'exemple de réalisation représenté, ledit appareil agricole (1) est du type pulvérisateur porté par un tracteur. Ainsi, l'intégralité du poids du pulvérisateur, avec la cuve (4) destinée à contenir un liquide de traitement, est portée par le tracteur. D'une manière connue, le pulvérisateur comporte encore des moyens de pompage (non représentés) du liquide de traitement contenu dans ladite cuve (4) pour l'envoyer sous pression jusqu'auxdites buses de pulvérisation. Ledit liquide de traitement est ainsi déposé en fines gouttelettes sur les plantes ou sur le sol à traiter. De telles buses étant largement connues, elles n'ont pas été représentées sur les figures et elles ne seront pas décrites davantage.

Lors des trajets de la ferme au champ ou d'un champ à un autre champ, le pulvérisateur est amené à être déplacé sur des routes et chemins au moyen d'un tracteur. Ainsi, il doit respecter les réglementations en vigueur pour la circulation sur les voies publiques, notamment en ce qui concerne sa largeur. Pour cela, les bras latéraux (5A, 5B) de la rampe (3), disposés derrière la cuve (4), sont repliés vers le haut, comme décrit précédemment. Dans le cas d'un pulvérisateur porté, ce sont les roues du tracteur qui passent sur les bosses, dans les trous ou les ornières, etc... lors du transport. Ces irrégularités entraînent des chocs dus à un déplacement vertical brutal de l'une des roues vers le bas, lorsque la roue tombe dans un trou ou vers le haut lorsque la roue passe sur une bosse. Le dispositif antichoc (16) est destiné à absorber ces chocs pour qu'ils ne soient pas transmis à la rampe (3). A cet effet, le dispositif antichoc (16) comporte au moins un ressort (17) de compression destiné à agir entre le bâti (2) et la rampe (3). Ce ressort (17) s'étend essentiellement verticalement de manière à absorber les chocs verticaux. Le ressort (17) absorbe et restitue l'énergie due au choc, il donne un mouvement d'oscillation à la traverse (19). Ce ressort (17) pourrait être remplacé par tout moyen élastique équivalent.

La traverse (19) s'étend sensiblement horizontalement et perpendiculairement à la direction d'avance (A). Elle s'étend sensiblement au-dessus des rails (13A, 13B) dudit bâti (2). La traverse (19) présente avantageusement une forme de U disposé à plat, dont les pattes sont liées audit bâti (2) via les articulations (18A, 18B). D'une manière particulièrement avantageuse, la traverse (19) porte les deux supports de maintien (14A, 14B). Un support de maintien (14A, 14B) est monté sur chaque patte de la traverse (19) en forme de U. Pour le transport, le verrou (15A, 15B) permet de maintenir ledit bras latéral (5A, 5B) respectif sur ledit bâti (2) par l'intermédiaire du support de maintien (14A, 14B) respectif.

Selon l'exemple de réalisation représenté sur les figures, le dispositif antichoc (16) comprend avantageusement deux ressorts (17A, 17B). Un ressort (17A, 17B) étant disposé de chaque côté du plan vertical médian (8) du bâti (2). Les ressorts (17A, 17B) s'étendent dans le voisinage d'un support de maintien (14A, 14B) correspondant. Les ressorts (17A, 17B) s'étendent, de préférence, dans le plan vertical, perpendiculaire à la direction d'avance (A), contenant les supports de maintien (14A, 14B) correspondants. Ledit ressort (17A, 17B) est disposé directement entre le bâti (2) et le support de maintien (14A, 14B) correspondant.

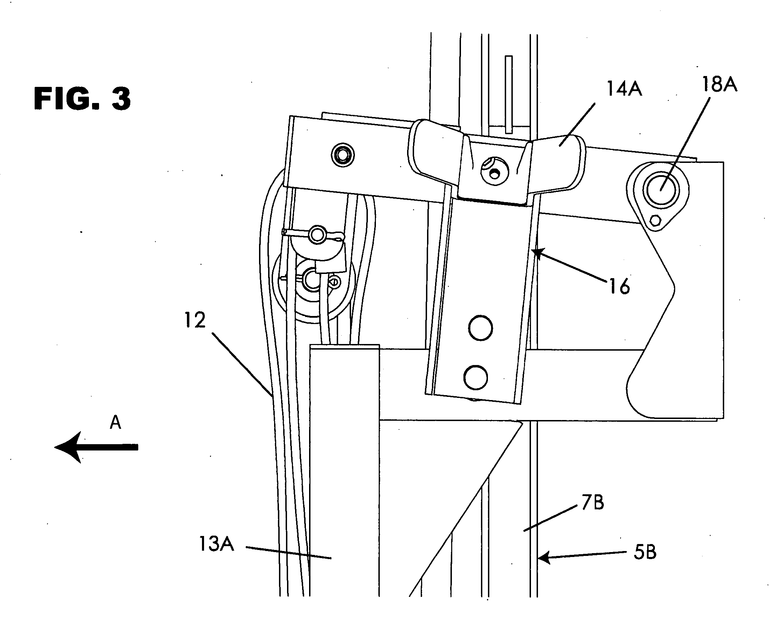

A la lumière de la figure 3, on peut voir que les supports de maintien (14A, 14B) avec la traverse (19) sont liés au bâti (2) au moyen des articulations (18A, 18B) respectives disposées symétriquement de part et d'autre du plan vertical médian (8) du bâti (2). Chaque articulation (18A, 18B) présente un axe sensiblement horizontal et perpendiculaire à la direction d'avance (A). Ainsi, lors d'un choc, les ressorts (17A, 17B) se compriment et les supports de maintien (14A, 14B) et la traverse (19) pivotent autour de leur articulation (18A, 18B) respective. Les articulations (18A, 18B) sont disposées en arrière du dispositif de maintien (14A, 14B) compte tenu de la direction d'avance (A). Grâce à ce dispositif antichoc (16), les chocs de la rampe (3) sur le bâti (2) au niveau des supports de maintien (14A, 14B), lors du transport avec les bras latéraux (5A, 5B) repliés, sont efficacement et directement absorbés par les ressorts (17A, 17B). Les verrous (15A, 15B) de chaque bras latéral (5A, 5B) sont ainsi préservés.

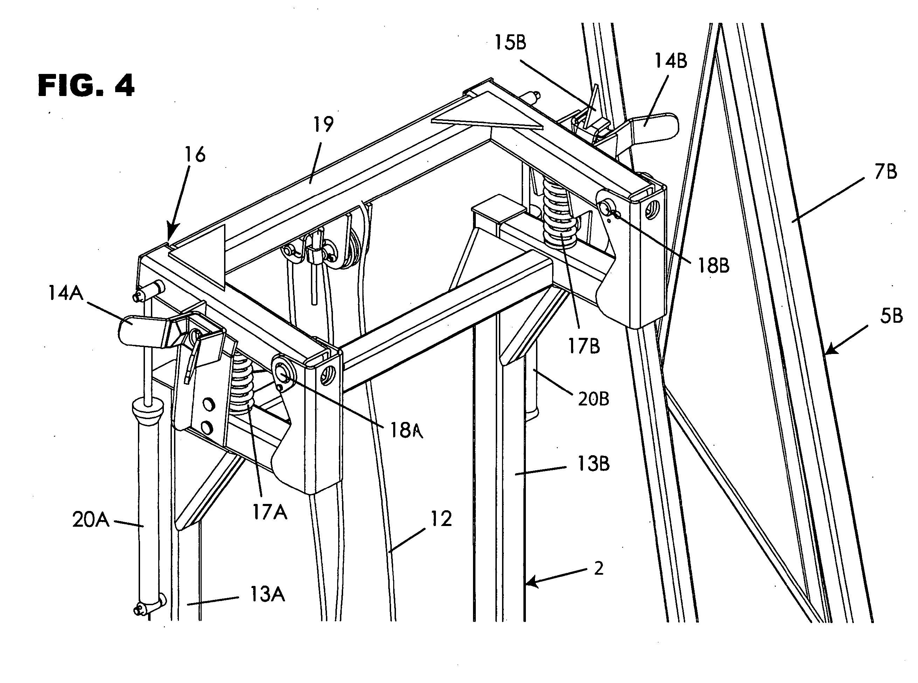

Selon un autre exemple de réalisation représenté sur la figure 4, le dispositif antichoc (16) comporte, en sus, au moins un amortisseur (20) disposé entre le bâti (2) et le support de maintien (14A, 14B). Avantageusement, le dispositif antichoc (16) comprend deux amortisseurs (20A, 20B) configurés pour agir en parallèle avec les deux ressorts (17A, 17B). Un amortisseur (20A, 20B) est disposé de chaque côté du plan vertical médian (8) du bâti (2). Chaque amortisseur (20A, 20B) est destiné à agir entre le bâti (2) et la traverse (19) portant les supports de maintien (14A, 14B). Les amortisseurs (20A, 20B) s'étendent sensiblement verticalement et amortissent les mouvements de pivotement de la traverse (19) autour de l'articulation (18A, 18B) correspondante. Chaque amortisseur (20A, 20B) est lié d'une part à un des rails (13A, 13B) du bâti (2) et d'autre part à une patte de la traverse (19). Par la présence de ces amortisseurs (20A, 20B), on améliore le fonctionnement du dispositif antichoc (16) avec les ressorts (17A, 17B) car les accélérations verticales sont immédiatement absorbées. Le dispositif antichoc (16) se stabilise alors plus vite, car l'amortisseur (20A, 20B) a pour fonction de freiner les oscillations dues à la présence des ressorts (17A, 17B). Un amortisseur dissipe l'énergie et supprime le mouvement d'oscillation donné par un ressort. Le dispositif antichoc (16) permet d'isoler les mouvements de la rampe (3) de ceux du tracteur. On remarque à la lumière de la figure 4, que le ressort (17A, 17B) est avantageusement disposé entre l'articulation (18A, 18B) correspondante et l'amortisseur (20A, 20B) correspondant.

Selon un autre exemple de réalisation non représenté, le dispositif antichoc (16) comporte un seul ressort (17) disposé sensiblement dans le plan vertical médian (8) du bâti (2). Le ressort (17) peut être associé à un amortisseur (20).

Selon encore un autre exemple de réalisation non représenté, le dispositif antichoc (16) est placé sur la rampe (3) au niveau des bras latéraux (5A, 5B). Plus précisément, les ressorts (17A, 17B) du dispositif antichoc (16) sont disposés entre le verrou (15A, 15B) et le tronçon intermédiaire (7A, 7B).

L'invention concerne également un appareil agricole d'épandage de produits du type traîné ou automoteur comportant une rampe d'épandage de produits (3) conforme à l'invention.

L'invention s'applique plus particulièrement aux pulvérisateurs agricoles, mais peut également s'appliquer aux épandeurs d'engrais ou autres.

Il est bien évident que l'invention n'est pas limitée au mode de réalisation décrit ci-dessus et représenté sur les dessins annexés. Des modifications restent possibles, notamment en ce qui concerne la constitution ou le nombre des divers éléments ou par substitution d'équivalents techniques, sans pour autant sortir du domaine de protection tel qu'il est défini par les revendications suivantes.

## Revendications

1. Appareil agricole d'épandage de produits (1) comportant un bâti (2) et une rampe d'épandage de produits (3) constituée par un tronçon central (6) et deux bras latéraux (5A, 5B) s'étendant de part et d'autre dudit tronçon central (6), lors du transport lesdits bras latéraux (5A, 5B) sont repliés vers le haut autour d'une articulation horizontale respective d'axe sensiblement horizontal et parallèle à la direction d'avance (A), chaque bras latéral (5A, 5B) présente un verrou (15A, 15B) permettant de maintenir ledit bras latéral (5A, 5B) respectif sur ledit bâti (2) par l'intermédiaire d'un support de maintien (14A, 14B) respectif, un dispositif antichoc (16) étant disposé entre ledit bâti (2) et ladite rampe (3), ladite rampe (3) étant liée audit bâti (2) au moyen d'une traverse (19) et ladite traverse (19) étant liée audit bâti (2) au moyen d'au moins une articulation (18A, 18B) d'axe sensiblement horizontal et perpendiculaire à la direction d'avance (A).

2. Appareil agricole selon la revendication 1, ***caractérisé en ce que*** ledit dispositif antichoc (16) est disposé entre ledit bâti (2) et ladite traverse (19).

3. Appareil agricole selon la revendication 1 ou 2, ***caractérisé en ce que*** ledit dispositif antichoc (16) comporte au moins un ressort (17A, 17B) s'étendant essentiellement verticalement.

4. Appareil agricole selon l'une quelconque des revendications 1 à 3, ***caractérisé en ce que*** ledit dispositif antichoc (16) comporte, en sus, au moins un amortisseur (20A, 20B).

5. Appareil agricole selon l'une quelconque des revendications 1 à 4, ***caractérisé en ce que*** ladite rampe (3) est liée à ladite traverse (19) par l'intermédiaire d'un organe de traction (12).

6. Appareil agricole selon l'une quelconque des revendications 1 à 5, ***caractérisé en ce que*** ledit bâti (2) présente deux supports de maintien (14A, 14B) qui sont montés sur ladite traverse (19).

7. Appareil agricole selon l'une quelconque des revendications 1 à 6, ***caractérisé en ce que*** ledit dispositif antichoc (16) comprend deux ressorts (17A, 17B) et qu'un ressort (17A, 17B) est disposé dans le voisinage d'un support de maintien (14A, 14B).

8. Appareil agricole selon l'une quelconque des revendications 1 à 7, ***caractérisé en ce que*** ledit dispositif antichoc (16) est monté sur ladite rampe (3).

9. Appareil agricole d'épandage de produits (1) selon l'une quelconque des revendications 1 à 8, ***caractérisé en ce qu'il*** est du type porté ou traîné par un tracteur agricole, ou du type automoteur.

## Patentansprüche

1. Landwirtschaftliche Vorrichtung (1) zum Ausbringen von Produkten mit einem Gestell (2) und einem Spritzgestänge (3), das aus einem mittleren Teilabschnitt (6) und zwei seitlichen sich beiderseits des mittleren Teilabschnitts (6) ausstreckenden Armen (5A, 5B) gebildet ist, während dem Transport werden die seitliche Arme (5A, 5B) nach oben um ein entsprechendes horizontales Gelenk mit einer im wesentlichen horizontalen und zur Vorschubrichtung (A) parallelen Achse zusammengeklappt, jeder seitliche Arm (5A, 5B) weist ein Riegel (15A, 15B) auf, der es gestattet den entsprechenden Arm (5A, 5B) mittels eines entsprechenden Halteträgers (14A, 14B) auf dem Gestell (2) zu halten, wobei eine Stosssicherungsvorrichtung zwischen dem Gestell (2) und dem Spritzgestänge (3) angebracht ist, wobei das Spritzgestänge (3) mittels eines Querbalkens (19) mit dem Gestell (2) verbunden ist und wobei der Querbalken (19) mittels mindestens einem Gelenk (18A, 18B) mit einer im wesentlichen horizontalen und zur Vorschubrichtung (A) parallelen Achse mit dem Gestell (2) verbunden ist.

2. Landwirtschaftliche Vorrichtung nach Anspruch 1, ***dadurch gekennzeichnet,* dass** die Stosssicherungsvorrichtung (16) zwischen dem Gestell (2) und dem Querbalken (19) angebracht ist.

3. Landwirtschaftliche Vorrichtung nach Anspruch 1 oder 2, ***dadurch gekennzeichnet,* dass** die Stosssicherungsvorrichtung (16) mindestens eine Feder (17A, 17B) aufweist, die sich im wesentlichen senkrecht erstreckt.

4. Landwirtschaftliche Vorrichtung nach irgend einem der Ansprüche 1 bis 3, ***dadurch gekennzeichnet,* dass** die Stosssicherungsvorrichtung (16) zusätzlich mindestens ein Dämpfer (20A, 20B) aufweist.

5. Landwirtschaftliche Vorrichtung nach irgend einem der Ansprüche 1 bis 4, ***dadurch gekennzeichnet,* dass** das Spritzgestänge (3) mittels eines Zugelementes (12) mit dem Querbalken (19) verbunden ist.

6. Landwirtschaftliche Vorrichtung nach irgend einem der Ansprüche 1 bis 5, ***dadurch gekennzeichnet,* dass** das Gestell (2) zwei Halteträger (14A, 14B) aufweist, die an dem Querbalken (19) angebracht sind.

7. Landwirtschaftliche Vorrichtung nach irgend einem der Ansprüche 1 bis 6, ***dadurch gekennzeichnet,* dass** die Stosssicherungsvorrichtung (16) zwei Federn (17A, 17B) aufweist und das eine der Federn (17A, 17B) in der Nähe des Halteträgers (14A, 14B) angebracht ist.

8. Landwirtschaftliche Vorrichtung nach irgend einem der Ansprüche 1 bis 7, ***dadurch gekennzeichnet,* dass** die Stosssicherungsvorrichtung (16) an dem Spritzgestänge (3) angebracht ist.

9. Landwirtschaftliche Vorrichtung nach irgend einem der Ansprüche 1 bis 8, ***dadurch gekennzeichnet,* dass** es sich um eine Vorrichtung vom an einen landwirtschaftlichen Schlepper angebauten oder angehängten Typ oder vom selbstfahrenden Typ handelt.

## Claims

1. Agricultural apparatus (1) for spreading products comprising a frame (2) and a product-spreading boom (3) consisting of a central section (6) and two lateral arms (5A, 5B) extending on either side of the said central section (6); during transport, the said lateral arms (5A, 5B) are folded up about a respective horizontal articulation with an axis that is substantially horizontal and parallel to the direction of forward travel (A); each lateral arm (5A, 5B) has a latch (15A, 15B) making it possible to hold the said respective lateral arm (5A, 5B) on the said frame (2) by means of a respective holding support (14A, 14B), an anti-impact device (16) being arranged between the said frame (2) and the said boom (3), the said boom (3) being connected to the said frame (2) by means of a cross-beam (19) and the said cross-beam (19) being connected to the said frame (2) by means of at least one articulation (18A, 18B) with an axis that is substantially horizontal and perpendicular to the direction of advance (A).

2. Agricultural apparatus as claimed in claim 1, ***characterized in* that** the said anti-impact device (16) is arranged between the said frame (2) and the said cross-beam (19).

3. Agricultural apparatus as claimed in claim 1 or 2, ***characterized in* that** the said anti-impact device (16) comprises at least one spring (17A, 17B) extending essentially vertically.

4. Agricultural apparatus as claimed in any one of claims 1 to 3, ***characterized in* that** the said anti-impact device (16) additionally comprises at least one shock absorber (20A, 20B).

5. Agricultural apparatus as claimed in any one of claims 1 to 4, ***characterized in* that** the said boom (3) is connected to the said cross-beam (19) by means of a draft member (12).

6. Agricultural apparatus as claimed in any one of claims 1 to 5, ***characterized in* that** the said frame (2) has two holding supports (14A, 14B) that are mounted on the said cross-beam (19).

7. Agricultural apparatus as claimed in any one of claims 1 to 6, ***characterized in* that** the said anti-impact device (16) comprises two springs (17A, 17B) and that one spring (17A, 17B) is arranged in the vicinity of a holding support (14A, 14B).

8. Agricultural apparatus as claimed in any one of claims 1 to 7, ***characterized* in that** the said anti-impact device (16) is mounted on the said boom (3).

9. Agricultural apparatus for spreading products (1) as claimed in any one of claims 1 to 8, ***characterized in* that** it is of the type that is mounted on or trailed by an agricultural tractor, or of the self-propelled type.
